(19) Europäisches Patentamt
European Patent Office
Office européen des brevets

(11) **EP 0 459 875 B1**

## (12) FASCICULE DE BREVET EUROPEEN

(45) Date de publication et mention
de la délivrance du brevet:
**02.01.1997 Bulletin 1997/01**

(51) Int. Cl.⁶: **B32B 15/08**

(21) Numéro de dépôt: **91401334.7**

(22) Date de dépôt: **23.05.1991**

(54) **Procédé de réalisation de tôle de structure multicouche et produit obtenu par le procédé**

Verfahren zur Herstellung eines mehrschichtigen Bleches und danach hergestelltes Produkt

Process for producing a multilayer sheet metal and product obtained thereby

(84) Etats contractants désignés:
**BE CH DE DK ES FR GB IT LI LU NL SE**

(30) Priorité: **31.05.1990 FR 9006805**

(43) Date de publication de la demande:
**04.12.1991 Bulletin 1991/49**

(73) Titulaire: **USINOR SACILOR Société Anonyme
F-92800 Puteaux (FR)**

(72) Inventeurs:
• **Mantel, Marc
F-73200 Albertville (FR)**
• **Cunat, Pierre-Jean
F-71130 Gueugnon (FR)**

(74) Mandataire: **Polus, Camille et al
c/o Cabinet Lavoix
2, Place d'Estienne d'Orves
75441 Paris Cedex 09 (FR)**

(56) Documents cités:
**FR-A- 1 564 100**     **FR-A- 2 283 736**
**FR-A- 2 343 597**     **GB-A- 1 072 362**
**GB-A- 1 156 898**     **GB-A- 1 317 814**
**US-A- 3 784 396**     **US-A- 3 931 448**

• **J. SHIELDS, B.SC. "Adhesives Handbook" &&
CO. LTD, London**

**Description**

La présente invention concerne un procédé de fabrication de tôle de structure multicouche dite tôle sandwich et la tôle obtenue par le procédé, tôle composée d'au moins deux feuilles métalliques laminées formant substrat, assemblées par au moins une âme qui assure la cohésion de la structure.

Les tôles de structure multicouche sont développées pour répondre à trois objectifs principaux:

- atténuation de leur tendance à entrer en résonnance
- amortissement des bruits aériens (industrie automobile, électromécanique, électoménager...)
- besoins esthétiques et sensitifs d'aspect, de toucher, de sonorité.

La prise en compte de ces considérations oriente vers l'élaboration de matériaux susceptibles d'absorber une partie de l'énergie vibratoire lorsque ledit matériau est soumis à vibration.

La dissipation de l'énergie vibratoire sous forme de chaleur se fait dans un matériau viscoélastique par exemple un polymère et le choix judicieux de ce polymère permet d'adapter les propriétés d'amortissement, en fonction des plages de température et des fréquences d'utilisation.

Dans le but d'élaborer des tôles de structure multicouche présentant les trois caractéristiques citées ci-dessus, il a été réalisé des assemblages de feuilles métalliques associées à une âme par exemple en résine époxy ou phénolique. Ces résines organiques sont, soit polymérisées entre les feuilles métalliques pressées et chauffées, soit insérées entre lesdites feuilles après polymérisation, sous la forme d'un film.

Afin de réduire la résistance électrique des résines insérées entre les feuilles, et cela pour permettre le soudage par point, il est connu de charger ces résines en microparticules conductrices de l'électricité comme par exemple des billes de nickel, les résines placées entre les feuilles métalliques chargées ou non chargées de particules conductrices étant polymérisables.

L'utilisation de telles tôles de structure multicouche ne convient pas nécessairement dans des domaines d'application où les feuilles métalliques dont elles sont constituées ont par exemple, l'inconvénient de se désolidariser de l'âme de résine par un manque d'adhérence, en particulier, lorsque lesdites structures multicouches sont soumises à des contraintes mécaniques, soit lors de leur déformation permanente après emboutissage, soit sous l'effet d'une énergie vibratoire dans un domaine particulier de fréquences.

Le but de l'invention est donc l'obtention de tôles de structure multicouche offrant des caractéristiques spécifiques phoniques et mécaniques associées à une fabrication simplifiée due à la nature des matériaux utilisés pour constituer l'âme.

L'invention a ainsi pour objet un procédé de fabrication de tôles de structure multicouche caractérisé en ce que,

- on enduit au moins une feuille métallique d'une suspension constituée de particules d'un polymère ayant des propriétés d'adhésivité dans un milieu de dispersion aqueux et/ou organique,
- on applique sur la feuille enduite avec la suspension une autre feuille pour former une structure multicouche,
- on presse la structure multicouche,
- on élève la température de la structure multicouche afin de provoquer l'évaporation partielle ou totale du milieu aqueux et/ou organique et l'agglomération des particules en suspension dans le milieu de dispersion.

Par "polymère ayant des propriétés d'adhésivité", on entend un homopolymère choisi parmi le poly-(acetate de vinyle), le poly(chlorure de vinyle), le polystyrène et le polybutadiène ou un copolymère choisi parmi les polymères styrène/butadiène, acétate de vinyle/ester maléique, ester acrylique/styrène ou un mélange pondéré d'homopolymère et de copolymère.

Avantageusement, la température permettant de provoquer l'évaporation est comprise entre 100 et 250°C et maintenue pendant une durée variant de quelques secondes, de préférence 2 à 3 secondes à la température de 250°C, à quelques minutes, de préférence 2 à 3 minutes à la température de 100°C.

Dans une forme particulière de fabrication de l'invention on effectue un séchage partiel de ladite suspension préalablement à l'application d'une feuille sur la feuille enduite de la suspension.

La suspension contient des particules d'un homopolymère choisi parmi le poly(acétate de vinyle), le poly(chlorure de vinyle), le polystyrène et le polybutadiène, ou des particules d'un copolymère choisi parmi les polymères styrène/butadiène, acétate de vinyle/ester maléique, ester acrylique/styrène, ou encore un mélange pondéré de particules d'homopolymère et de copolymère.

De préférence, la suspension est réalisée dans un milieu de dispersion choisi parmi l'eau, les alcools, les cétones, les hydrocarbures aromatiques, l'essence de térébenthine et le butyl diglycol.

De manière avantageuse la suspension contient en outre un composé plastifiant.

De préférence, le composé plastifiant est choisi parmi le dibutylphtalate, le tributylphosphate, un ester et un polyester.

De manière avantageuse, la suspension contient en outre un composé épaississant, choisi de préférence parmi un caséinate alcalin, un sel polyacrylique, la carboxyméthylcellulose, l'hydroxy-éthylcellulose et la méthylcellulose.

L'invention a également pour objet une tôle de structure multicouche dite tôle sandwich fabriquée par le procédé décrit ci-dessus.

Parmi les caractéristiques avantageuses de la tôle multicouche selon l'invention, l'âme est constituée essentiellement de particules agglomérées formant un film d'extrait secs.

Les particules agglomérées consistent en un homopolymère choisi parmi le poly(acétate de vinyle), le poly(chlorure de vinyle), le polystyrène et le polybutadiène ou un copolymère choisi parmi les copolymères styrène/butadiène, acétate de vinyle/ester maléique et ester acrylique/styrène ou un mélange pondéré de particules d'homopolymère et de copolymère.

Avantageusement, au moins une feuille est en acier, en aluminium ou encore en acier au carbone inoxydable.

L'invention sera mieux comprise à l'aide de la description qui va suivre, donnée uniquement à titre d'exemple, pour la compréhension de laquelle on se référera aux dessins sur lesquels,

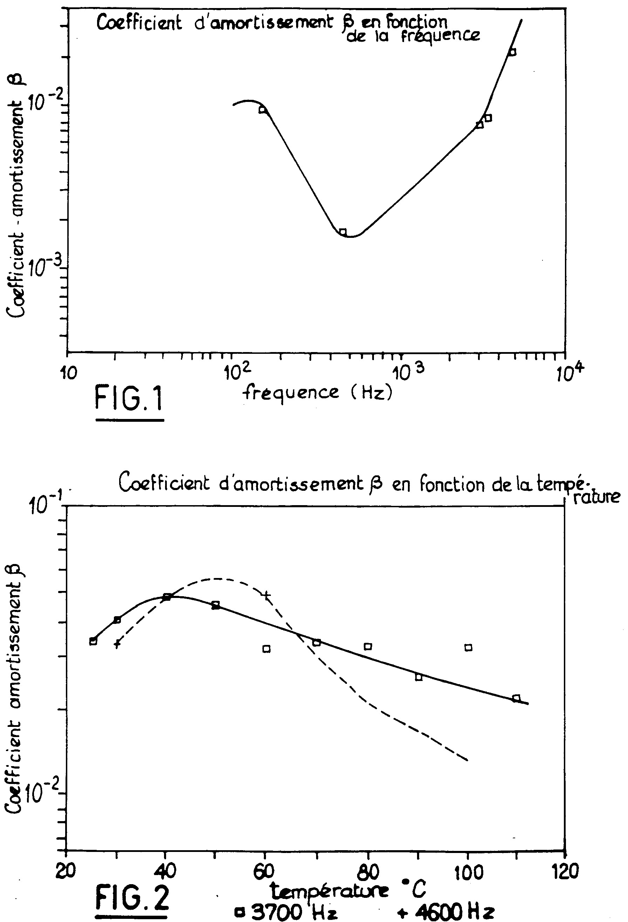

- les figures 1 et 2 représentent les valeurs du coefficient d'amortissement b d'une tôle multicouche selon l'invention, dont l'âme est réalisée à partir d'une suspension de poly(acétate de vinyle), coefficient d'amortissement déterminé d'une part, en fonction de la fréquence (fig. 1) et d'autre part en fonction de la température (fig. 2) pour deux fréquences données (3700 Hz et 4600 Hz).

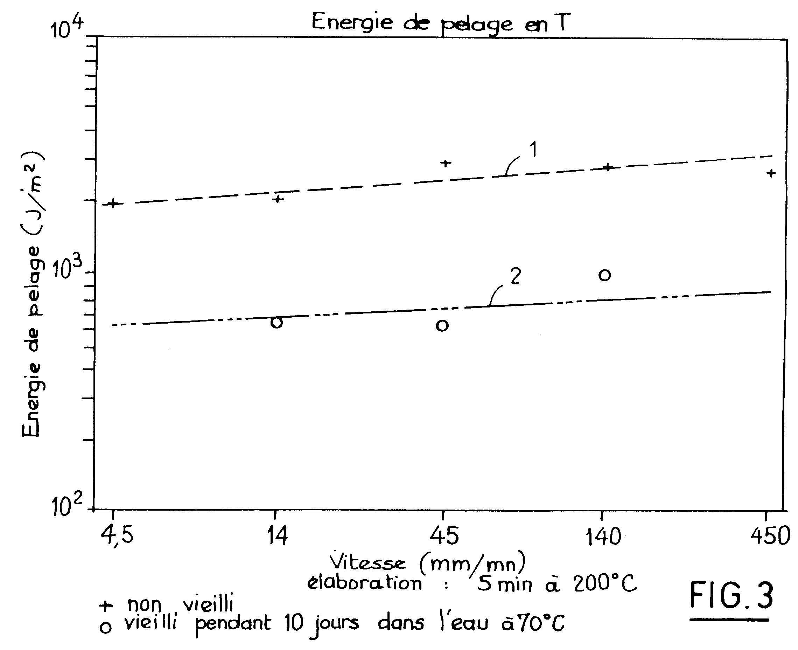

- la figure 3 représente l'énergie de pelage obtenue lors d'une mesure de pelage en T en fonction de la vitesse de pelage pour une tôle élaborée suivant le procédé de l'invention et pour une même tôle soumise à un test d'humidité.

Le procédé selon l'invention, pour la réalisation de tôles de structure multicouche dites tôles sandwich, consiste à enduire au moins une feuille métallique, par exemple laminée à froid et dont l'épaisseur est comprise entre 0,1 et 0,3 mm, d'une suspension constituée de particules d'homopolymère et/ou de copolymère dans un milieu de dispersion aqueux et/ou organique.

Lorsque l'enduction au moyen de la suspension est réalisée, on applique sur la feuille enduite de la suspension une seconde feuille. Puis on presse la structure multicouche ainsi obtenue en élevant la température afin d'obtenir un extrait sec d'homopolymère et/ou copolymère, après évaporation d'une partie ou de la totalité des constituants du milieu aqueux et/ ou organique. L'élévation de température de la suspension peut avoir lieu, soit pendant l'application sous pression de la deuxième feuille métallique, soit après l'application de celle-ci.

Dans un mode particulier de réalisation on sèche préalablement et partiellement la suspension avant l'application de la deuxième tôle.

Après séchage entre deux feuilles métalliques, la suspension forme une âme qui assure la cohésion de l'ensemble et confère à la tôle de structure multicouche des propriétés remarquables d'amortissement et d'insonorisation.

L'âme a avantageusement une épaisseur variant de 10 à 200 micromètres. Les suspensions pour l'obtention de l'âme sont constituées de particules d'homopolymère comme par exemple le poly(acétate de vinyle), le poly(chlorure de vinyle), le polystyrène, le polybutadiène ou de copolymères comme par exemple les polymères styrène/butadiène, acétate de vinyle/ester maléique, ester acrylique/styrène, ou encore d'un mélange en proportion déterminée des particules ci-dessus énumérées.

Les suspensions selon l'invention forment après séchage des extraits secs compris entre 40 et 60% en volume, le diamètre des particules en suspension variant de 0,1 à 3 micromètres.

La viscosité des suspensions dépend de l'extrait sec, du milieu de dispersion utilisé comme par exemple l'eau, les alcools, les cétones, les hydrocarbures aromatiques, l'essence de térébentine et le butyl diglycol.

La viscosité peut être ajustée en ajoutant une quantité déterminée d'un épaississant par exemple de type cellulosique ou acrylique, ou encore d'un plastifiant comme le dibutylphtalate, le tributylphosphate ou un mélange pondéré des constituants épaississants et plastifiants.

La viscosité est aussi fonction de l'extrait sec utilisé dans la suspension. La viscosité et les caractéristiques rhéologiques de la suspension peuvent être ainsi adaptées à la technique d'enduction de la suspension par exemple par rouleau applicateur, raclette, ou toutes autres techniques. Il est aussi possible d'ajuster la mouillabilité de la suspension pour différentes compositions de feuilles de métal constituant la structure multicouche.

Ces opérations d'assemblage des tôles formant substrat peuvent se dérouler sous une presse à plateaux chauffants lors de l'élaboration de tôles de structure multicouche planes ou encore sur une ligne de calendrage pour fabriquer des tôles de grande longueur conditionnées sous forme de bobines.

Les résultats des essais décrits ci-après permettront de mieux mettre en évidence les propriétés des tôles de structure multicouche dite tôles sandwich, élaborées par le procédé de l'invention, les feuilles composant les tôles sandwich étant en acier inoxydable laminé.

Deux caractéristiques physiques ont été mesurées : les caractéristiques d'amortissement et d'adhésion.

a) Caractéristiques d'amortissement :

Les caractéristiques d'amortissement sont déterminées par la mesure du coefficient d'amortissement, ou facteur de perte, noté b, en utilisant un dispositif basé sur la mise en évidence des pics de résonance sous vibration continue.

A cet effet, des éprouvettes de dimensions normalisées sont disposées verticalement, l'une des extrémités étant encastrée, l'autre étant libre. Ces éprouvettes sont soumises à des vibrations forcées dans une gamme de fréquence de 10 Hz à 5000 Hz.

Un émetteur électromagnétique crée une vibration transversale à l'extrémité libre et un récepteur identique mesure l'amplitude de la vibration près de l'extrémité encastrée. Au cours d'un balayage en fréquence, la courbe du gain émetteur/récepteur (courbe de résonance) passe par plusieurs pics dont la largeur est directement liée au coefficient d'amortissement. Si $f_o$ est la fréquence et W F, la largeur du pic à mi-hauteur, le facteur de perte est donné par

$$b = W F/f_o.$$

Par un balayage très fin en fréquence autour des fréquences de résonnance déterminées après un balayage plus large, il est possible de tracer une courbe représentant le coefficient d'amortissement b en fonction de la fréquence.

Les figures 1 et 2 présentent d'une part, les valeurs du coefficient d'amortissement b d'une tôle de structure multicouche en fonction de la fréquence et d'autre part, les valeurs du coefficient b en fonction de la température de la tôle à deux fréquences données.

Dans l'exemple, la tôle selon l'invention est constituée d'une structure multicouche formée d'une âme de 70 μm pressées entre deux tôles laminées en acier inoxydable de 0,2 mm d'épaisseur. L'âme est obtenue avec une suspension dont les particules de poly(acétate de vinyle) ont un diamètre de 1 à 2 μm. Le séchage de la suspension a été obtenu en soumettant l'ensemble à une pression de $10^5$ Pa et à un chauffage à 200°C pendant 2 mn pour obtenir un extrait sec de 54%.

Le coefficient d'amortissement ou coefficient de perte b, est compris dans l'intervalle entre 0,01 et 0,1, dans un domaine de fréquence compris entre $2 \times 10^3$ et $10^4$ Hertz (figure 1) et dans un intervalle de température compris entre 20 et 120°C à la fréquence de 3700 Hz (figure 2).

b) Caractéristiques d'adhésion :

Les caractéristiques d'adhésion sont déterminées par la mesure de l'énergie de pelage en T.

Les pelages à 180° ou en T, par exemple dans une machine de traction, sont plus particulièrement utilisés pour les matériaux flexibles possédant les dimensions et des propriétés physiques leur permettant une flexion susceptible d'atteindre un angle de 180° ou 90° sans qu'aucune fissure n'apparaisse dans les feuilles extérieures.

Le résultat de la mesure est l'obtention d'une force de pelage brute ne distinguant pas la force d'adhésion ou de cohésion en pelage, de la force nécessaire pour plier les feuilles en forme de T.

A partir d'une loi de comportement élasto-plastique, un calcul de l'énergie de déformation des feuilles permet de déduire l'énergie de pelage dépensée pour rompre les liaisons d'adhésion métal/polymère.

La résistance au pelage exprimée en N/m ou en $J/m^2$ est le rapport d'une force à une dimension (largeur de la tôle).

La figure 3 présente une caractéristique de pelage en T en fonction de la vitesse de pelage.

En fonction de la vitesse de pelage, l'adhésion est sensiblement constante est égale à environ $2KJ/m^2$ après élaboration de la tôle (courbe 1), et de $1KJ/m^2$, après que l'échantillon ait séjourné 10 jours dans de l'eau à 70°C (courbe 2).

Le tableau I ci-dessous regroupe les caractéristiques de l'exemple ci-dessus décrit ainsi que celles de différentes tôles de l'invention.

TABLEAU I

| Caractéristiques de la tôle multicouche | Nature des particules de la suspension | | |
|---|---|---|---|
| | poly(acétate de vinyle) | polymère acétate/maléate | polymère styrène/butadiène |
| Epaisseur de l'âme (µm) | 70 | 100 | 80 |
| ø des particules (µm) | \| 0,1 - 0,2 \| | \| 0,5 - 2 \| | 0,15 |
| Viscosité (mPa.s à 50 t/mn) | 5 000 ± 2 000 | - | 100 ± 50 |
| Extrait sec (%) | 54 | 55 | 50 |
| Epaisseur de la tôle (mm) | 0,2 | 0,2 | 0,2 |
| Référence du matériau de la tôle | AISI 304 | AISI 304 | AISI 304 |
| Coefficient de perte $\beta$ | \| $10^{-3}$-$10^{-2}$ \| | \| $10^{-2}$-$10^{-1}$ \| | \| $2.10^{-3}$-$3.10^{-2}$ \| |
| Intervalle de fréquences ($\times 10^3$ Hertz) | \| 0,1-4 \| | \| 0,01-4 \| | \| 0,01-4 \| |
| Intervalle de températures (°C) | \| 20 - 150 \| | \| 20 - 150 \| | \| 20 - 150 \| |
| Energie de pelage en T (J/$m^2$) | 2 200 | 1 000 | 800 |
| Energie de pelage en T après vieillissement (J/$m^2$) | 600 | 550 | 300 |

Les différentes suspensions peuvent être utilisées dans la fabrication de tôles de structure multicouche dont les tôles substrats sont en acier, aluminium ou en acier inoxydable.

Les caractéristiques de la structure multicouche selon l'invention peuvent être mises en évidence dans un exemple de réalisation tel qu'un lave-vaisselle.

Les moteurs, pompes de vidange, électrovannes, moyens de chauffage et de filtration des eaux usées génèrent essentiellement, dans ce type de réalisation un bruit aérien.

La cuve du lave-vaisselle est réalisée avec une tôle de structure multicouche selon l'invention composée d'éléments pliés ou emboutis, structure dont les feuilles ont une épaisseur sensiblement égale à 0,2 mm et une âme formée essentiellement de poly(acétate de vinyle) d'épaisseur d'environ 0,1 mm.

L'atmosphère humide du lave-vaisselle, lors de son utilisation, nécessite qu'au moins la feuille de la structure constituant la surface interne de la cuve soit en acier inoxydable.

Les caractéristiques physiques de la structure multicouche de la tôle de la cuve sont déterminées en fonction des différents facteurs de bruits générés, lors du fonctionnement du lave-vaisselle par les éléments et moyens de fonctionnement tant internes qu'externes constituant le lave-vaisselle.

En testant le niveau de bruit de deux machines à laver la vaisselle de même type, l'une servant de référence munie d'une cuve dont les parois sont en tôle d'acier inoxydable partiellement revêtu de bitume, l'autre étant munie d'une cuve dont les parois sont en tôle de structure multicouche, selon l'invention, il est constaté que les niveaux de bruit du lave-vaisselle à une cuve en tôle multicouche est réduit de plus de 15 décibels.

Outre une diminution du niveau sonore du lave-vaisselle en fonctionnement, le faible coefficient thermique en transmission des parois en structure multicouche améliore aussi son isolation thermique.

On décrira ci-après un exemple de réalisation de l'invention.

EXEMPLE

On fabrique une tôle sandwich à l'aide de deux tôles laminées en acier inoxydable type 304 (AISI) de 0,2 mm d'épaisseur.

On enduit l'une des tôles au moyen d'une suspension de polyacétate de vinyle dans l'eau, à l'aide d'une raclette sur une épaisseur d'environ 0,2 mm.

On applique la deuxième tôle et on presse la structure multicouche sous une presse à plateaux chauffants et on

EP 0 459 875 B1

élève la température de cette structure à 200° C pendant 3 min. Les caractéristiques techniques de la tôle sandwich obtenue sont rapportées dans la colonne 1 du tableau I.

**Revendications**

1. Procédé de fabrication d'une tôle de structure multicouche dite tôle sandwich ayant des propriétés d'amortissement des vibrations et d'insonorisation, composée de feuilles métalliques laminées formant substrat, liées entre elles par une âme qui assure la cohésion de la structure, selon lequel :

   - on enduit au moins une feuille métallique d'une suspension constituée de particules d'un polymère ayant des propriétés d'adhésivité dans un milieu de dispersion aqueux et/ou organique, les particules étant des particules d'homopolymère choisi parmi le poly(acétate de vinyle, le poly(chlorure de vinyle), le polystyrène et le polybutadiène, ou des particules de copolymère choisi parmi les polymères styrène/butadiène, acétate de vinyle/ester maléique et ester acrylique/styrène ou un mélange de particules d'homopolymère et de copolymère,
   - on applique sur la feuille enduite avec la suspension une autre feuille métallique pour former une structure multicouche,
   - puis on presse la structure multicouche ainsi obtenue, et
   - on élève la température de la structure multicouche afin de provoquer l'évaporation du milieu aqueux et/ou organique entre deux feuilles métalliques et la formation entre lesdites feuilles d'une âme intermédiaire formée essentiellement de particules formant un film d'extraits secs représentant entre 40 et 60% en volume après séchage de la suspension.

2. Procédé selon la revendication 1, caractérisé en ce qu'on élève la température jusqu'à 100 à 250°C et qu'on la maintient pendant une durée variant de quelques secondes, de préférence 2 à 3 secondes, pour une température de 250°C, à quelques minutes, de préférence 2 à 3 minutes, pour une température de 100°C.

3. Procédé selon la revendication 1, caractérisé en ce qu'on effectue un séchage partiel de ladite suspension préalablement à l'application d'une feuille sur la feuille enduite avec la suspension.

4. Procédé selon la revendication 1, caractérisé en ce que la suspension est réalisée dans un milieu de dispersion choisi parmi l'eau, les alcools, les cétones, les hydrocarbures aromatiques, l'essence de térébentine et le butyl diglycol.

5. Procédé selon la revendication 1, caractérisé en ce que la suspension contient en outre un composé plastifiant.

6. Procédé selon la revendication 5, caractérisé en ce que le composé plastifiant est choisi parmi le dibutylphtalate, le tributylphosphate, un ester et un polyester.

7. Procédé selon la revendication 1, caractérisé en ce que la suspension contient en outre un composé épaississant.

8. Procédé selon la revendication 7, caractérisé en ce que le composé épaississant est choisi parmi un caséinate alcalin, un sel polyacrylique, la carboxyméthylcellulose et la méthylcellulose.

**Claims**

1. Method of manufacturing a sheet material of multi-layer structure known as sandwich sheet having vibration-damping and soundproofing properties, composed of laminated metal sheets forming a substrate, connected to one another by a core which ensures the cohesion of the structure, wherein:

   - at least one metal sheet is coated with a suspension consisting of particles of a polymer having adhesive properties in an aqueous and/or organic dispersive medium, the particles being homopolymer particles chosen from among polyvinyl acetate, polyvinyl chloride, polystyrene and polybutadiene or copolymer particles chosen from among the polymers styrene/butadiene, vinyl acetate/maleic ester and acrylic ester/styrene or a mixture of homopolymer and copolymer particles,

   - another metal sheet is applied to the sheet coated with the suspension in order to form a multi-layer structure,

   - then the multi-layer structure thus obtained is pressed, and

6

- the temperature of the multi-layer structure is raised in order to cause the evaporation of the aqueous and/or organic medium between two metal sheets and the formation between the said sheets of an intermediate core formed essentially of particles forming a film of dry matter representing between 40 and 60% by volume after drying of the suspension.

2. Method as claimed in Claim 1, characterised in that the temperature is raised up to 100 to 250°C and is maintained for a duration varying from several seconds, preferably 2 to 3 seconds, for a temperature of 250°C, to several minutes, preferably 2 to 3 minutes, for a temperature of 100°C.

3. Method as claimed in Claim 1, characterised in that partial drying of the said suspension is carried out prior to the application of a sheet to the sheet coated with the suspension.

4. Method as claimed in Claim 1, characterised in that the suspension is produced in a dispersive medium chosen from among water, alcohols, ketones, aromatic hydrocarbons, spirit of turpentine and dibutyl glycol.

5. Method as claimed in Claim 1, characterised in that the suspension also contains a plasticising compound.

6. Method as claimed in Claim 5, characterised in that the plasticising compound is chosen from among dibutyl phthalate, tributyl phosphate, an ester and a polyester.

7. Method as claimed in Claim 1, characterised in that the suspension also contains a thickening compound.

8. Method as claimed in Claim 7, characterised in that the thickening compound is chosen from among an alkaline caseinate, a polyacrylic salt, carboxyxmethyl cellulose and methyl cellulose.

## Patentansprüche

1. Verfahren zur Herstellung eines Bleches mit Mehrschichtaufbau, eines sogenannten Sandwich-Bleches, welches Schwingungs- und Schalldämmungseigenschaften aufweist und aus das Ausgangsmaterial bildenden gewalzten Metallblättern aufgebaut ist, die untereinander durch einen Kern verbunden sind, welcher den Zusammenhalt des Aufbaus gewährleistet, wonach

- man wenigstens ein Metallblatt mit einer Suspension bestreicht, die aus Teilchen eines Haftungseigenschaften aufweisenden Polymers in einem wässerigen und/oder organischen Dispersionsmedium besteht, wobei die Teilchen Teilchen eines Homopolymers, ausgewählt aus Polyvinylazetat, Polyvinylchlorid, Polystyrol und Polybutadien, oder Teilchen eines Copolymers, ausgewählt aus den Polymeren Styrol/Butadien, Vinylazetat/Maleinsäureester und Acrylsäureester/Styrol oder ein Gemisch aus Homopolymer- und Copolymer-Teilchen sind,
- man auf das mit der Suspension bestrichene Blatt ein weiteres Metallblatt zur Bildung eines Mehrschichtaufbaus aufbringt,
- man dann den so erhaltenen Mehrschichtaufbau preßt, und
- man die Temperatur des Mehrschichtaufbaus anhebt, um die Verdampfung des wässerigen und/oder organischen Mediums zwischen zwei Metallblättern und die Ausbildung eines Zwischenkerns zwischen den Blättern zu bewirken, der im wesentlichen aus Teilchen gebildet ist, die einen Film aus Trockenextrakten bilden, die zwischen 40 und 60 Volumen-% nach der Trocknung der Suspension darstellen.

2. Verfahren nach Anspruch 1, dadurch gekennzeichnet, daß man die Temperatur bis auf 100 bis 250°C anhebt und sie während einer Zeitdauer aufrechterhält, die zwischen einigen Sekunden, vorzugsweise 2 bis 3 Sekunden, für eine Temperatur von 250°C und einigen Minuten, vorzugsweise 2 bis 3 Minuten, für eine Temperatur von 100°C variiert.

3. Verfahren nach Anspruch 1, dadurch gekennzeichnet, daß man eine Teiltrocknung der Suspension vor der Aufbringung eines Blattes auf das mit der Suspension eingestrichene Blatt bewirkt.

4. Verfahren nach Anspruch 1, dadurch gekennzeichnet, daß die Suspension in einem Dispersionsmedium, ausgewählt aus Wasser, Alkoholen, Ketonen, aromatischen Kohlenwasserstoffen, Terpentinöl und Butyldiglycol, erfolgt.

5. Verfahren nach Anspruch 1, dadurch gekennzeichnet, daß die Suspension ferner eine Weichmacherverbindung enthält.

6. Verfahren nach Anspruch 5, dadurch gekennzeichnet, daß die Weichmacherverbindung aus Dibutylphtalat, Tributylphosphat, einem Ester und einem Polyester ausgewählt wird.

7. Verfahren nach Anspruch 1, dadurch gekennzeichnet, daß die Suspension ferner eine Verdickungsverbindung enthält.

8. Verfahren nach Anspruch 7, dadurch gekennzeichnet, daß die Verdickungsverbindung aus einem alkalischen Kaseinat, einem Polyacrylsalz, Carboxymethylzellulose und Methylzellulose ausgewählt wird.

Coefficient d'amortissement β en fonction de la fréquence

FIG.1

Coefficient d'amortissement β en fonction de la température

FIG.2

□ 3700 Hz      + 4600 Hz

9

Energie de pelage en T

FIG.3

elaboration : 5 min à 200°C

+ non vieilli
o vieilli pendant 10 jours dans l'eau à 70°C

EP 0 459 875 B1